# EUROPEAN PATENT APPLICATION

(11) **EP 2 695 698 A1**
(43) Date of publication of application: **12.02.2014**
(21) Application number: 11862965.8
(22) Date of filing: 26.12.2011
(51) Int. Cl.: B23K 20/04, C22C 21/02, B23K 20/233

(54) **HIGH STRENGTH CLAD PLATE FOR BRAZING USING A STRIP CASTING ALUMINUM ALLOY AND METHOD OF MANUFACTURING SAME**

(30) Priority: 08.04.2011 KR 20110032440
(71) Applicant: Korea Institute of Machinery and Materials, Daejeon 305-343 (KR)
(72) Inventor: EUH, Kwang Jun, Changwon-si Gyeongnam 641-939 (KR); KIM, Su Hyeon, Changwon-si Gyeongnam 641-801 (KR); KANG, Joo Hee, Changwon-si Gyeongnam 641-801 (KR); KIM, Hyoung Wook, Changwon-si Gyeongnam 641-940 (KR)
(74) Representative: Epping - Hermann - Fischer
(86) International application number: PCT/KR2011/010074
(87) International publication number: WO 2012/138042

(57) **Abstract**

There is provided a high-strength clad sheet for brazing having a strip-cast aluminum alloy. The clad sheet includes a core material that is made from a strip-cast aluminum alloy; and a material for brazing that is attached to the core material through roll-bonding and is attached to the core material through cold-rolling after annealing. There is provided a method of manufacturing a high-strength clad sheet for brazing having a strip-cast aluminum alloy.

## Description

### BACKGROUND OF THE INVENTION

### Field of the Invention

The present invention relates to a high-strength clad sheet for brazing manufactured by using a high-strength strip-cast aluminum alloy as a core material and bonding a material for brazing to an outer surface of the core material through cold-rolling and a method of manufacturing the same.

### Description of the Related Art

Since an aluminum alloy is light in weight and has high heat conductivity, the aluminum alloy has been used in a heat exchanger for a vehicle, for example, a radiator, a condenser, an evaporator, a heater, or an intercooler. The heat exchanger for a vehicle is mostly manufactured by a brazing method.

Meanwhile, since there is a demand for lightening and miniaturizing of an indoor/outdoor heat exchanger for an air conditioner manufactured by layering aluminum fins and then inserting tubes into the layered aluminum fins, it is attempted to apply a manufacturing process using the brazing method to the indoor/outdoor heat exchanger for an air conditioner.

Typically, the brazing is performed at a high temperature of about 600°C by using brazing filler metal of an Al-Si-based alloy. Accordingly, an aluminum-alloy brazing sheet having excellent brazing properties and also having high strength and erosion resistance after brazing is needed.

The aluminum alloy-based heat exchanger manufactured through the brazing includes corrugated fins that primarily serve to radiate heat and tubes for circulating cooling water or coolant. When the tube is damaged due to erosion or destruction, the cooling water or the coolant circulated in the tube is leaked. For this reason, in order to improve a lifespan of a product, it is necessary to manufacture the aluminum-alloy brazing sheet having excellent strength and erosion resistance after the brazing.

However, in order to meet a recent increasing demand for lightening of a vehicle, there is also a demand for lightening of the heat exchanger for a vehicle. Accordingly, it is considered that the respective members constituting the heat exchanger are thinly formed. Further, it is necessary to further improve the strength of the aluminum-alloy brazing sheet after the brazing.

Similarly, it is necessary to further improve the strength of the aluminum brazing sheet applied to the indoor/outdoor heat exchanger for an air conditioner after the brazing.

Conventionally, as a tube material of the heat exchanger for a vehicle, such as a radiator or a heater, in which the cooling water is circulated along an inner surface of the tube there has been generally used a three-layer tube material by cladding an inner surface of a core material made from an Al-Mn-based alloy such as a JIS3003 alloy with a sacrificial anode material such as an Al-Zn-based alloy and cladding an outer surface (a surface exposed to the atmosphere) of the core material with brazing filler metal such as an Al-Si-based alloy.

However, the clad material using the JIS3003 alloy core material has an insufficient strength of about 110 MPa after the brazing.

In order to improve the strength after the brazing, there has been suggested a three-layer clad tube material obtained by adding Mg to the core material (see Japanese Patent Laid-Open Publication Nos. H8-246117 and 2003-55727).

Unfortunately, when the Mg is added to the core material, since the Mg reacts with fluoride-based flux used in a Nocolock brazing method to form a compound such as MgF, the brazing properties are remarkably degraded.

Further, Korean Patent Laid-Open Publication No. 2007-0061413 describes a "method of manufacturing an aluminum-alloy brazing sheet" in which the aluminum-alloy brazing sheet is manufactured by casting aluminum alloys for a core material, an intermediate material and a sacrificial anode material to manufacture a core material, a intermediate material and a sacrificial anode material, homogenizing the manufactured core material, intermediate material and sacrificial anode material, and then hot-rolling the homogenized core material, intermediate material and sacrificial anode material.

Disadvantageously, in the case of an alloy manufactured by being added with a lot of alloying elements, there is a problem that non-uniformity of a cast structure is increased and thus defects are highly likely to occur during the roll-bonding and the subsequent rolling of thin plates.

Furthermore, there is a problem that since the aluminum-alloy brazing sheet is manufactured through many rolling processes, productivity is decreased and a lot of energy is needed.

### SUMMARY OF THE INVENTION

In order to solve the conventional problems, an aspect of the present invention is to provide a high-strength clad sheet for brazing manufactured by using a high-strength strip-cast aluminum alloy as a core material and bonding a material for brazing to an outer surface of the core material through cold-rolling and a method of manufacturing the same.

In order to achieve the aforementioned aspects, according to an aspect of the present invention, there is provided a high-strength clad sheet for brazing having a strip-cast aluminum alloy. The clad sheet includes a core material that is made from a strip-cast aluminum alloy; and a material for brazing that is attached to the core material through roll-bonding and is attached to the core material through cold-rolling after annealing.

The core material may include 0.7 to 1.0 weight% of silicon (Si), 0.45 to 0.5 weight% of iron (Fe), 0.1 to 0.15 weight% of cooper (Cu), 1.2 to 1.6 weight% of manganese (Mn), aluminum (Al) as a remainder, and necessary impurities.

The core material further may include 0.5 weight% of nickel (Ni).

The material for brazing may be plural in number.

The material for brazing may be an Al-Si-based alloy including 6.8 to 13.0 weight% of silicon (Si).

The material for brazing may be a JIS4343 alloy.

The core material and the material for brazing may be obtained through cold-rolling at a thickness reduction ratio of 30 to 70%.

The high-strength clad sheet for brazing may have a tensile strength of 214 MPa or more.

According to another aspect of the present invention, there is provided a method of manufacturing a high-strength clad sheet for brazing having a strip-cast aluminum alloy. The method includes preparing a core material that is made from a strip-cast aluminum alloy and a material for brazing that is made from an Al-Si-based alloy including 6.8 to 13.0 weight% of silicon (Si); cleaning the core material and the material for brazing; wire-brushing outer surfaces of the core material and the material for brazing; layering the core material and the material for brazing and roll-bonding the layered core material and material for brazing; primarily rolling the roll-bonded core material and material for brazing; annealing the primarily rolled core material and material for brazing; and secondarily rolling the annealed core material and material for brazing to complete the high-strength clad sheet for brazing.

In the preparing of the core material and the material for brazing, the core material may include 0.7 to 1.0 weight% of silicon (Si), 0.45 to 0.5 weight% of iron (Fe), 0.1 to 0.15 weight% of cooper (Cu), 1.2 to 1.6 weight% of manganese (Mn), aluminum (Al) as a remainder, and necessary impurities.

The annealing may be performed for 1 to 2 hours at 450°C.

The primarily rolling may be performed by cold-rolling the core material and the material for brazing at a thickness reduction ratio of 32 to 36%.

The secondarily rolling may be performed by cold-rolling the core material and the material for brazing at a thickness reduction ratio of 30 to 70%.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a table showing a comparison result of compositions of a core material according to a preferred embodiment of the present invention and a core material according to Comparative Example;
FIG. 2 is a process flowchart illustrating a method of manufacturing a high-strength clad sheet for brazing having a strip-cast aluminum alloy according to the present invention;
FIG. 3 is a table showing a thickness with a change in reduction ratio at the time of manufacturing clad materials according to Comparative Examples 1 to 3 according to a process procedure of the present invention;
FIG. 4 is a graph showing a measurement result of tensile strength and yield strength of the clad materials according to Comparative Examples 1 to 3 shown in FIG. 3;
FIG. 5 is a table showing core materials and material for brazing according to Embodiments 1 to 3 of the present invention and Comparative Example 1;
FIG. 6 is a graph showing a comparison result of tensile strength and elongation percentages of the clad materials according to Embodiments 1 to 3 and Comparative Example 1;
FIG. 7 is an actual photograph showing a result of a W-bending test performed to verify whether or not the clad sheet according to Embodiment 2 of the present invention is peeled off; and
FIG. 8 is an actual photograph showing a result of a W-bending test performed to verify whether or not the clad sheet according to Embodiment 3 of the present invention is peeled off.

### DETAILED DESCRIPTION OF THE PREFERRED EMBODIMENT

Exemplary embodiments of the present invention will now be described in detail with reference to the accompanying drawings.

As set forth above, according to exemplary embodiments of the present invention, in a high-strength clad sheet for brazing having a strip-cast aluminum alloy, a high-strength strip-cast aluminum alloy is used as a core material, and a material for brazing is bonded to the core material through cold-rolling.

Accordingly, there is an advantage that since the clad sheet is thin in thickness and has less deviation in composition, the occurrence of defects is minimized.

Further, there is an advantage that since energy consumption needed to manufacture a high-strength clad sheet for brazing is remarkably reduced, so that it is possible to reduce manufacturing cost.

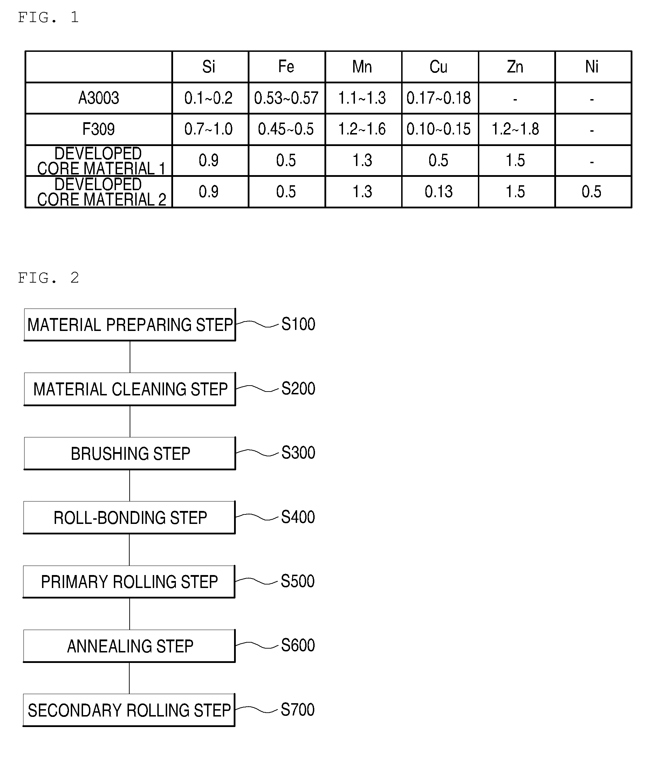

Hereinafter, compositions of a core material which is a configuration of a high-strength clad sheet (hereinafter, referred to as a "clad sheet") for brazing having a strip-cast aluminum alloy according to the present invention will be described with reference to FIG. 1 while being compared with Comparative Examples.

FIG. 1 is a table showing a comparison result of compositions of a core material according to a preferred embodiment of the present invention with compositions of a core material according to Comparative Examples.

Before the description thereof, all terms and words used in the specifications and claims are not interpreted as the meaning generally used in the dictionary, but should be interpreted as the meaning and concept coincident with the technological sprit of the present invention on the basis of a fundamental rule that an inventor can suitably define the concept of corresponding terms to describe his or her invention using the best method.

Accordingly, embodiments described in the specifications and configurations illustrated in the drawings are merely a preferred embodiment, and do not wholly represent the technical sprit of the present invention. Therefore, it should be appreciated that various modifications and equivalents to these embodiments are possible at the time of filing the present application.

The clad sheet according to the present invention includes a core material that is made from a strip-cast aluminum alloy, and a material for brazing that is attached to the core material through roll-bonding and is attached to the core material through cold-rolling after annealing.

Further, as shown in FIG. 1, the core material includes 0.7 to 1.0 weight% of silicon (Si), 0.45 to 0.5 weight% of iron (Fe), 0.1 to 0.15 weight% of cooper (Cu), 1.2 to 1.6 weight% of manganese (Mn), aluminum (Al) as a remainder, and necessary impurities.

Furthermore, the core material may further include 0.5 weight% of nickel (Ni), and may be layered in a multi layer, when necessary.

That is, the core material is an alloy in which amounts of Cu and Ni added to an Al-Mn-based alloy are controlled. It has been known that Cu and Ni elements are effective to increase high-temperature strength of the Al-Mn-based alloy, and the Ni is an element capable of minimizing a decrease in conductivity and increasing strength.

The material for brazing is plural in number. That is, the materials for brazing are provided at both surfaces of the core material one by one.

Moreover, the material for brazing is an Al-Si-based alloy including 6.8 to 13.0 weight% of silicon (Si). The material for brazing is a JIS4343 alloy.

The clad sheet is manufactured by cold-rolling core the material and the material for brazing at a thickness reduction ratio of 30 to 70% in a secondary rolling process among a plurality of processes, and the clad sheet has a tensile strength of 214 MPa or more.

A procedure of manufacturing the clad sheet will be described below with reference to FIG. 2.

FIG. 2 is a process flowchart illustrating a method of manufacturing a high-strength clad sheet for brazing having a strip-cast aluminum alloy according to the present invention.

As shown in the drawing, the clad sheet is manufactured by sequentially performing a material preparing step (S100) of preparing a core material that is made from a strip-cast aluminum alloy and a material for brazing that is made from an Al-Si-based alloy including 6.8 to 13.0 weight% of silicon (Si), a material cleaning step (S200) of cleaning the core material and the material for brazing, a brushing step (S300) of wire-brushing outer surfaces of the core material and the material for brazing, a roll-bonding step (S400) of layering the core material and the material for brazing and roll-bonding the layered core material and material for brazing, a primary rolling step (S500) of primarily rolling the roll-bonded core material and material for brazing, an annealing step (S600) of annealing the primarily rolled core material and material for brazing, and a secondary rolling step (S700) of secondarily rolling the annealed core material and material for brazing to complete the high-strength clad sheet for brazing.

In the material preparing step (S100), the core material includes 0.7 to 1.0 weight% of silicon (Si), 0.45 to 0.5 weight% of iron (Fe), 0.1 to 0.15 weight% of cooper (Cu), 1.2 to 1.6 weight% of manganese (Mn), aluminum (Al) as a remainder, and necessary impurities.

In addition, as described above, the core material may further include 0.5% weight% of nickel (Ni).

In the material preparing step (S100), when the core material and the material for brazing are prepared, the material cleaning step (S200) of cleaning the core material and the material for brazing is performed.

The material cleaning step (S200) is performed by cleaning surfaces of the core material and the material for brazing by using a solvent such as alcohol or acetone.

After the material cleaning step (S200), the brushing step (S300) is performed. The brushing step (S300) is performed to improve a bonding force at the time of performing the roll-bonding step (S400).

After the roll-bonding step (S400), the primary rolling step (S500) is performed. In the primary rolling (S500), the core material and the material for brazing are cold-rolled, and are rolled at a thickness reduction ratio of 32 to 36% in the embodiment of the present invention.

After the primary rolling step (S500), the annealing step (S600) is performed. The annealing step (S600) is performed to remove tissue generated in the roll-bonding step (S400), and is preferably performed for 1 to 2 hours at 450°C.

After the annealing step (S600), the secondary rolling step (S700) is performed. The secondary rolling step (S700) is performed to adjust a final thickness by cold-rolling the core material and the material for brazing at a thickness reduction ratio of 30 to 70%.

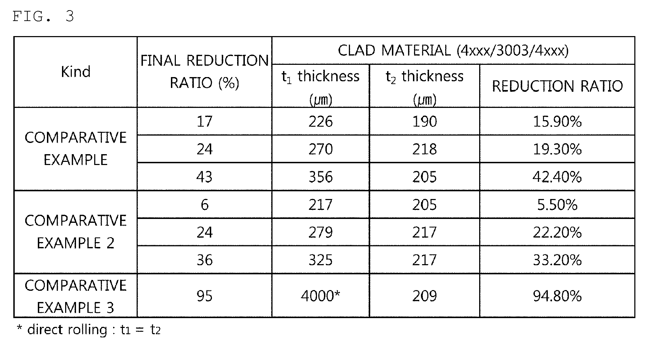

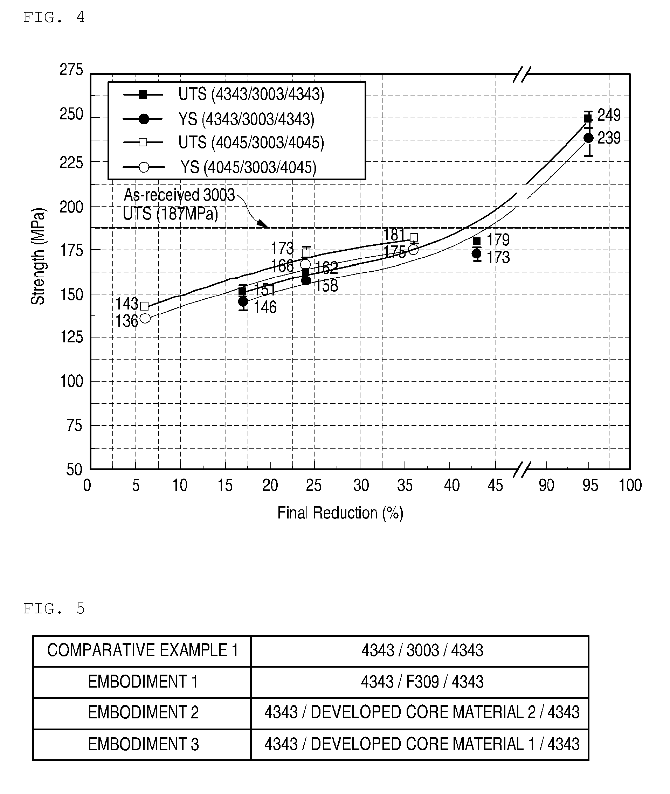

Hereinafter, strength of the core materials according to Comparative Examples will be explained with reference to FIGS. 3 and 4.

FIG. 3 is a table showing a thickness with a change in reduction ratio at the time of manufacturing the core materials according to Comparative Examples 1 to 3 according to a process procedure according to the present invention, and FIG. 4 is a graph showing a measurement result of tensile strength and yield strength of the core materials according to Comparative Examples 1 to 3 shown in FIG. 3.

A JIS3003 alloy is used as the core materials of Comparative Examples, and a JIS4343 alloy or a JIS4045 alloy is used as the material for brazing.

Further, in order to determine possibility of cold-rolling of an aluminum composite sheet, compressed sheets (Comparative Examples 1 and 2) are manufactured by cold-rolling an aluminum composite sheet having an initial thickness of about 1.5 mm up manufactured through roll-bonding to a thickness of 0.2 mm, performing heat treatment on the cold-rolled aluminum composite sheet for 2 hours at 450°C, and then rolling the heat-treated aluminum composite sheet at a final reduction ratio of 6 to 43%.

Furthermore, an aluminum composite sheet (Comparative Example 3) having a final reduction ratio of 95% on which intermediate heat treatment is not performed is manufacture.

A brazing-simulation heat treatment (for 10 minutes at 610°C) is performed on the core materials of Comparative Examples 1 to 3 in order to evaluate brazing characteristics, and thicknesses thereof are shown in FIG. 3.

As a result, as shown in FIG. 4, it is observed that as the final reduction ratio increases, yield strength and tensile strength proportionally increase. Further, it is observed that when the JIS4045 alloy is used as the material, the strength increases.

However, even though the final reduction ratio is increased up to 45%, the sheets have strength of 187 MPa or less.

Moreover, except for the core material of Comparative Example 2 having a final reduction ratio of 6%, most sheets have an elongation percentage of 2 to 3.4%.

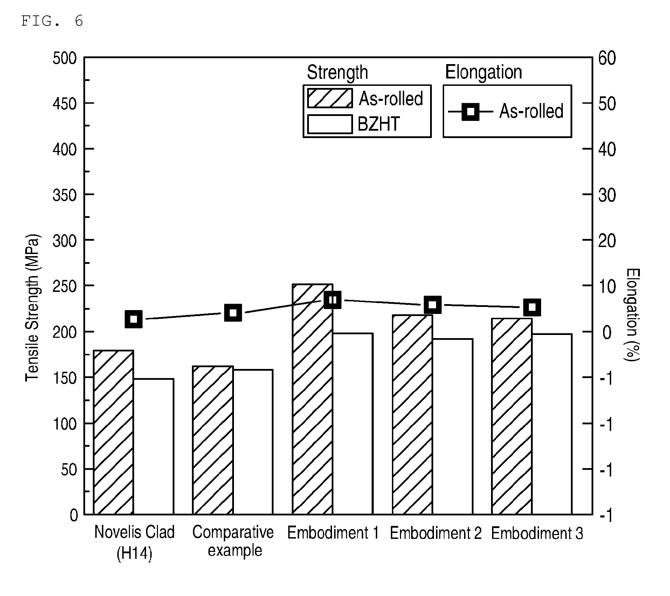

Hereinafter, a configuration of the clad sheet according to a preferred embodiment of the present invention and tensile strength thereof will be described with reference to FIGS. 5 and 6 while being compared with Comparative Examples.

FIG. 5 is a table showing configurations of core materials and materials for brazing of Embodiments 1 to 3 and Comparative Example 1, and FIG. 6 is a graph showing a comparison result of tensile strength and elongation percentages of the core materials of Embodiments 1 to 3 and Comparative Examples 1 shown in FIG. 5.

In the embodiment of the present invention, the core material and the material for brazing are adjusted to have a total thickness of 5 mm, and then roll-bonded to have a thickness of about 3 mm.

Thereafter, the primary rolling step (S500) is performed on the bonded core material and material for brazing at a reduction ratio of 32 to 36%. As a result, it can be seen that the roll-bonding is possible.

In addition, in the annealing step (S600), the rolled sheet having a thickness of 0.3 mm is heated for 2 hours at 450°C, and the secondary rolling step (S700) is performed thereon to manufacture clad sheets having thicknesses of 0.2 mm and 0.1 mm, respectively. Any problem does not occur until the clad sheets are rolled to have a thickness of 0.1 mm, and it is determined that additional cold-rolling are also possible.

As shown in FIG. 6, as can be seen from a measurement result of the tensile strength of the clad sheet, the tensile strength of the clad sheet having a developed core material 1 as the core material is higher than that of the clad sheet having a developed core material 2 as the core material. Further, the clad sheet after cold-rolling at a thickness reduction ratio of about 33% has a high strength of 214 to 251 MPa, and the clad sheet after brazing heat treatment is maintained at a tensile strength of 192 to 198 MPa. The clad sheet after cold-rolling has an elongation percentage of 4.3 to 6.0%, and has a favorable elongation percentage of 11.8 to 16.9% after the brazing heat treatment.

In the case of the clad sheet of Comparative Example 1 in which a JIS3003 alloy is used as the core material and a JIS4343 alloy is used the material for brazing, the strength thereof is hardly changed after the brazing heat treatment, and only the elongation percentage increases (3.312%).

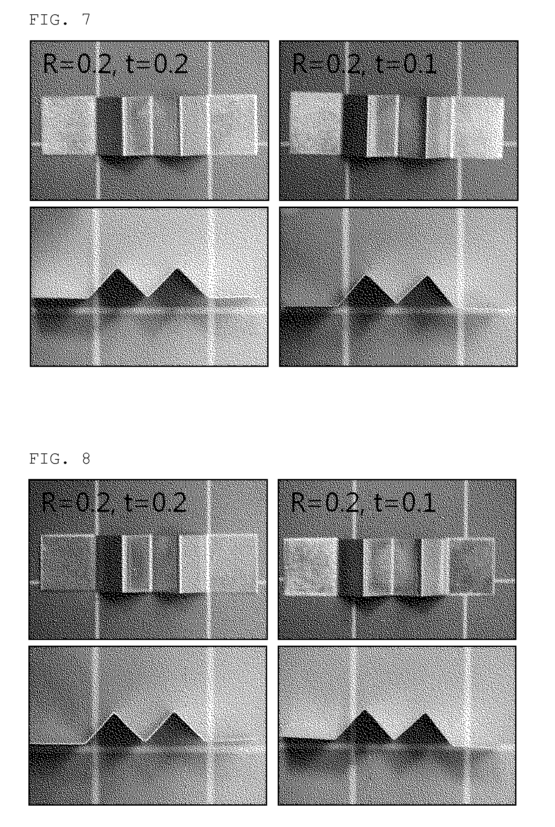

Hereinafter, a bending test result of the clad sheet according to the present invention will be described with reference to FIGS. 7 and 8.

FIG. 7 is an actual photograph showing a result of a W-bending test performed to verify whether or not the clad sheet according to Embodiment 2 of the present invention is peeled off, and FIG. 8 is an actual photograph showing a result of a W-bending test which is performed to verify whether or not the clad sheet according to Embodiment 3 of the present invention is peeled off.

First, the W-bending test is a kind of bending tests, and is primarily performed to determine bending properties of a thin plate. The W-bending test is performed under a severe bending condition as compared with a V-bending test. The bending test is performed by using JIS H3110 as a test standard and a tip having a curvature R in a range of 0.2 to 2.0 mm by using a 90° bending block.

Through the bending test, whether or not the peeling off of the material for brazing is peeled off, a correlation of R/t and roughness of a bending portion and a Normalized minimum bending radius (MBR/t) can be obtained.

The aforementioned bending test is performed for specimens of 40 x 10 mm obtained by cutting off the clad sheets according to Embodiments 2 and 3, and the bending properties of the clad sheets and whether or not the material for brazing is peeled off are observed.

As shown in FIG. 7, in the case of a minimum curvature R of 0.2 mm, there are no difficulties in forming the clad sheet such as the peeling off of the material for brazing and the shearing of the clad sheet. Furthermore, since creases do not occur at a surface of the clad sheet, the MBR/t is equal to or more than 2.0.

That is, the MBR/t of the clad sheet of the present invention is more improved than MBR/t (1.6 to 2.0) of the existing clad sheet of Comparative Example 1 having a thickness of 0.5 mm.

While the scope of the present invention is not limited to the exemplary embodiments, and it will be apparent to those skilled in the art that various modifications can be made without departing from the technical scope of the present invention.

In a high-strength clad sheet for brazing having a strip-cast aluminum alloy according to the present invention, a high-strength strip-cast aluminum alloy is used as a core material, and a material for brazing is bonded to the core material through cold-rolling.

Accordingly, since the clad sheet is thin in thickness and has less deviation in composition, the occurrence of defects is minimized. Therefore, the clad sheet is applicable to a heat exchanger for a vehicle such as a radiator, a condenser, an evaporator, a heater or an intercooler, which requires light in weight and high heat conductivity.

## Claims

1. A high-strength clad sheet for brazing having a strip-cast aluminum alloy, the clad sheet comprising:
a core material that is made from a strip-cast aluminum alloy; and
a material for brazing that is attached to the core material through roll-bonding and is attached to the core material through cold-rolling after annealing.

2. The high-strength clad sheet for brazing having a strip-cast aluminum alloy according to claim 1, wherein the core material includes 0.7 to 1.0 weight% of silicon (Si), 0.45 to 0.5 weight% of iron (Fe), 0.1 to 0.15 weight% of cooper (Cu), 1.2 to 1.6 weight% of manganese (Mn), aluminum (Al) as a remainder, and necessary impurities.

3. The high-strength clad sheet for brazing having a strip-cast aluminum alloy according to claim 2, wherein the core material further includes 0.5 weight% of nickel (Ni).

4. The high-strength clad sheet for brazing having a strip-cast aluminum alloy according to claim 3, wherein the material for brazing is plural in number.

5. The high-strength clad sheet for brazing having a strip-cast aluminum alloy according to claim 4, wherein the material for brazing is an Al-Si-based alloy including 6.8 to 13.0 weight% of silicon (Si).

6. The high-strength clad sheet for brazing having a strip-cast aluminum alloy according to claim 5, wherein the material for brazing is a JIS4343 alloy.

7. The high-strength clad sheet for brazing having a strip-cast aluminum alloy according to claim 6, wherein the core material and the material for brazing are obtained through cold-rolling at a thickness reduction ratio of 30 to 70%.

8. The high-strength clad sheet for brazing having a strip-cast aluminum alloy according to claim 7, wherein the high-strength clad sheet for brazing has a tensile strength of 214 MPa or more.

9. A method of manufacturing a high-strength clad sheet for brazing having a strip-cast aluminum alloy, the method comprising:
preparing a core material that is made from a strip-cast aluminum alloy and a material for brazing that is made from an Al-Si-based alloy including 6.8 to 13.0 weight% of silicon (Si) ;
cleaning the core material and the material for brazing;
wire-brushing outer surfaces of the core material and the material for brazing;
layering the core material and the material for brazing and roll-bonding the layered core material and material for brazing;
primarily rolling the roll-bonded core material and material for brazing;
annealing the primarily rolled core material and material for brazing; and
secondarily rolling the annealed core material and material for brazing to complete the high-strength clad sheet for brazing.

10. The method of manufacturing a high-strength clad sheet for brazing having a strip-cast aluminum alloy according to claim 9, wherein in the preparing of the core material and the material for brazing, the core material includes 0.7 to 1.0 weight% of silicon (Si), 0.45 to 0.5 weight% of iron (Fe), 0.1 to 0.15 weight% of cooper (Cu), 1.2 to 1.6 weight% of manganese (Mn), aluminum (Al) as a remainder, and necessary impurities.

11. The method of manufacturing a high-strength clad sheet for brazing having a strip-cast aluminum alloy according to claim 10, wherein the annealing is performed for 1 to 2 hours at 450°C.

12. The method of manufacturing a high-strength clad sheet for brazing having a strip-cast aluminum alloy according to claim 10, wherein the primarily rolling is performed by cold-rolling the core material and the material for brazing at a thickness reduction ratio of 32 to 36%.

13. The method of manufacturing a high-strength clad sheet for brazing having a strip-cast aluminum alloy according to claim 12, wherein the secondarily rolling is performed by cold-rolling the core material and the material for brazing at a thickness reduction ratio of 30 to 70%.
